# EUROPÄISCHE PATENTSCHRIFT

(11) **EP 2 013 493 B1**
(45) Veröffentlichungstag und Bekanntmachung des Hinweises auf die Patenterteilung: **03.03.2010**
(21) Anmeldenummer: 07723728.7
(22) Anmeldetag: 29.03.2007
(51) Int. Cl.: F16B 37/04

(54) **BEFESTIGUNGSVORRICHTUNG**
FASTENING DEVICE
DISPOSITIF DE FIXATION

(30) Priorität: 26.04.2006 DE 102006019256; 22.12.2006 DE 102006019411
(43) Veröffentlichungstag der Anmeldung: 14.01.2009
(73) Patentinhaber: A. RAYMOND ET CIE, 38000 Grenoble (FR)
(72) Erfinder: HULLMANN, Klaus, 79540 Lörrach (DE); DE JONG, Michael, 79589 Binzen (DE); ECKERT, Thomas, 79713 Bad Säckingen (DE)
(74) Vertreter: Rüttgers, Joachim
(86) Internationale Anmeldenummer: PCT/EP2007/002784
(87) Internationale Veröffentlichungsnummer: WO 2007/124824

(56) Entgegenhaltungen:
- EP-A1- 0 930 440
- EP-A1- 1 510 702
- ES-A1- 2 163 363
- US-A- 6 095 734
- US-A1- 2003 071 475

## Beschreibung

Die Erfindung betrifft eine Befestigungsvorrichtung gemäß dem Oberbegriff des Patentanspruches 1.

Eine derartige Befestigungsvorrichtung ist aus DE 35 24 651 A1 bekannt. Die vorbekannte Befestigungsvorrichtung zum Befestigen eines Anbauteiles an einem Trägerteil verfügt über eine Deckplatte und zwei an einander gegenüberliegenden Seiten der Deckplatte angeordnete Klammerarme. Jeder Klammerarm weist einen an der Deckplatte angesetzten Innenschenkel und einen Außenschenkel auf, wobei an dem Außenschenkel an seiner der Deckplatte zugewandten Stirnseite ein flacher Zungenabschnitt einer Abstützstruktur angeformt ist. Der Zungenabschnitt greift in eine in dem Innenschenkel ausgebildete, den Zungenabschnitt eng umgebende Aufnahmeausnehmung ein, wobei sich in der Einbausituation die Zungenabschnitte in einer im wesentlichen parallelen Ausrichtung zu der Deckplatte an der dem Anbauteil gegenüberliegenden Rückseite des Trägerteiles abstützen.

Zwar werden mit einer derartigen Befestigungsvorrichtung sehr hohe Auszugskräfte erzielt, allerdings ist von Nachteil, dass die Befestigungsvorrichtung innerhalb verhältnismäßig geringer Toleranzen an die Dicke des Trägerteiles angepasst sein muss.

Der Erfindung liegt die Aufgabe zugrunde, eine Befestigungsvorrichtung der eingangs genannten Art anzugeben, dass bei relativ hohen Auszugskräften mit in ihrer Dicke über eine verhältnismäßig großen Bereich variierenden Trägerteilen einsetzbar ist.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung die Abstützstruktur durch an Seitenrändern der Außenschenkel angeformte Seitenwangen mit angeschrägten Stirnseiten aufweist, passen sich die Klammerarme selbsttätig an die Dicke des jeweiligen Trägerteiles an, indem die Seitenwangen mehr oder weniger tief in die Aufnahmeausnehmung eintauchen.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbei- spiel einer erfindungsgemäßen Befestigungsvorrichtung,
- Fig. 2: in einer Schnittansicht das Ausführungsbeispiel gemäß Fig. 1 in einer Einbausituation,
- Fig. 3: in einer perspektivischen Ansicht ein weiteres Ausfüh- rungsbeispiel einer erfindungsgemäßen Vorrichtung,
- Fig. 4: in einer Schnittansicht das Ausführungsbeispiel gemäß Fig. 3,
- Fig. 5: in einer Schnittansicht ein weiteres Ausführungsbeispiel einer erfindungsgemäßen Befestigungsvorrichtung mit an ihren freien Enden miteinander verriegelten Klam- merarmen und
- Fig. 6: in einer Schnittansicht ein weiteres Ausführungsbeispiel einer erfindungsgemäßen Befestigungsvorrichtung mit sich in einen zwischen Klammerarmen ausgebildeten Schraubenaufnahmeraum erstreckenden Spreizzungen.

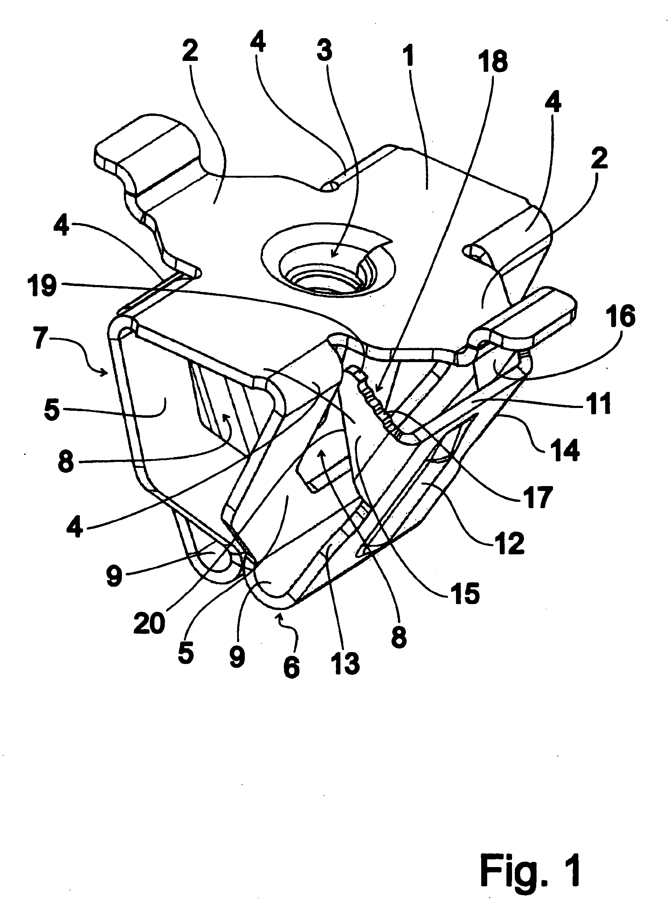

Fig. 1 zeigt in einer perspektivischen Ansicht ein Ausführungsbeispiel einer aus Blech gestanzten und gebogenen, zum Einfügen in ein in Fig. 1 nicht dargestelltes Trägerteil vorgesehenen erfindungsgemäßen Vorrichtung, die über eine im wesentlichen rechteckförmigen Deckplatte 1 verfügt. An einander gegenüberliegenden Langseiten der Deckplatte 1 sind sich von der Deckplatte 1 weg nach außen erstreckende Auflagezungen 2 angesetzt, die bei dem Ausführungsbeispiel gemäß Fig. 1 an ihrem von der Deckplatte 1 abgewandten Ende stufenförmig gebogen sind.

In der Mitte der Deckplatte 1 ist eine Gewindestruktur 3 beispielsweise in Gestalt eines Stanzgewindes vorhanden, in die zum Befestigen eines Anbauteiles an dem Trägerteil eine in Fig. 1 nicht dargestellte Schraube einschraubbar ist.

Beidseitig jeder Auflagezunge 2 sind jeweils ein Anbindungsabschnitt 4 ausgebildet, über die jeweils ein Innenschenkel 5 eines Klammerarmes 6, 7 an die Deckplatte 1 angesetzt ist. Die Innenschenkel 5 weisen in ihrem der Deckplatte 1 benachbarten Bereich jeweils eine Aufnahmeausnehmung 8 auf und erstrecken sich auf einer Seite der Deckplatte 1 aufeinander zu, so dass die Klammerarme 6, 7 mit ihren von der Deckplatte 1 abgewandten Enden vorzugsweise aneinander anliegen oder wenigstens dicht benachbart angeordnet sind.

An den von der Deckplatte 1 abgewandten Enden weisen die Klammerarme 6, 7 jeweils einen an den jeweiligen Innenschenkel 5 angesetzten, um etwa 180 Grad umgebogenen Umbiegeabschnitt 9 auf, an den weiterhin jeweils ein Außenschenkel 10 angeformt ist. Jeder Außenschenkel 10 erstreckt sich von dem Umbiegeabschnitt 9 in etwa parallel zu dem innenseitig gegenüberliegenden Innenschenkel 5 in Richtung der Deckplatte 1 und endet mit seiner der Deckplatte 1 zugewandten, gegenüber der Breite des Außenschenkel 10 im Ansatzbereich an den Umbiegeabschnitt 9 schmaleren Stirnseite 11 in einem Abstand von der Deckplatte 1, der größer als die Dicke des mit der erfindungsgemäßen Befestigungsvorrichtung einsetzbaren Trägerteiles ist. Zum Erhöhen der Steifigkeit der Außenschenkel 10 sowie zum Verringern der Montagekraft der erfindungsgemäßen Vorrichtung gemäß Fig. 1 sind in die Außenschenkel 10 jeweils eine sich in Längsrichtung der Außenschenkel 10 erstreckende und zu der Außenseite ausgewölbte Sicke 12 eingeformt.

An den Seitenrändern 13, 14 der Außenschenkel 10 sind in deren an die Stirnseite 11 angrenzenden Bereich flügelartige Seitenwangen 15, 16 angeformt, die von einer ursprünglich in der Ebene der Außenschenkel 10 liegenden Anordnung im wesentlichen rechtwinklig in Richtung des gegenüberliegenden Klammerarmes 6, 7 umgebogen worden sind und paarweise einander gegenüberliegen. Die über die Außenschenkel 10 überstehende Länge der Seitenwangen 15, 16 ist kleiner oder höchstens gleich dem Abstand der Innenschenkel 5 im Bereich der Seitenwangen 15, 16, so dass die Außenschenkel 10 bis zur Anlage an die Innenschenkel 5 einfedern können. Bei dem Ausführungsbeispiel gemäß Fig. 1 greifen die Seitenwangen 15, 16 in die Aufnahmeausnehmung 8 des jeweiligen Innenschenkels 5 ein.

Weiterhin lässt sich Fig. 1 entnehmen, dass die Seitenwangen 15, 16 an ihren der Deckplatte 1 zugewandten Stirnseiten 17 mit einer aus Erhebungen und Vertiefungen gebildeten Stufenstruktur 18 ausgebildet sind. An dem von dem Außenschenkel 10 wegweisenden Ende jede Seitenwange 15, 16 ist als Abschlusserhebung eine in Richtung der Deckplatte 1 über die Stirnseite 17 überstehende Blockiernase 19 vorhanden. Von dem von dem Außenschenkel 10 abgewandten Ende der Seitenwangen 15, 16 erstrecken sich eine schräge Rückseite 20 zu dem Außenschenkel 10, so dass die Dimension jeder Seitenwange 15, 16 in Längsrichtung von dem Außenschenkel 10 zu dem von dem Außenschenkel 10 abgewandten Ende kontinuierlich abnimmt.

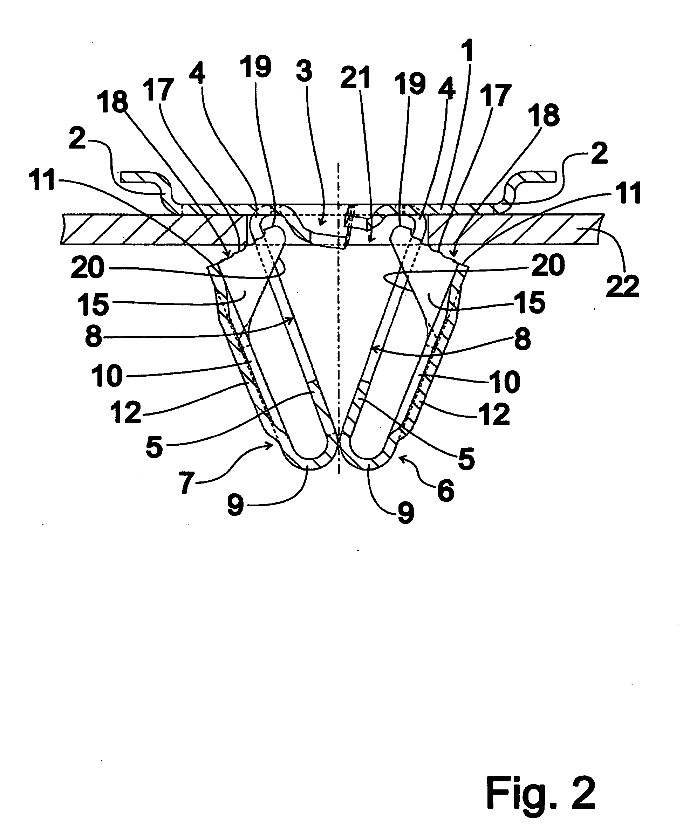

Fig. 2 zeigt in einer Schnittansicht das Ausführungsbeispiel gemäß Fig. 1 in einer Einbausituation in einem mit einer Einsteckausnehmung 21 ausgebildeten Trägerteil 22. Aus Fig. 2 ist ersichtlich, dass nach Durchführen der Klammerarme 6, 7 durch die Einsteckausnehmung 21 die Außenschenkel 10 soweit ausgefedert sind, bis die Stirnseiten 17 der Seitenwangen 15, 16 an dem Rand der Einsteckausnehmung 21 anliegen, wobei in Abhängigkeit der Dicke des jeweiligen Trägerteiles 22 die Außenschenkel 10 mehr oder weniger weit ausfedern. Dabei dienen die Stufenstrukturen 18 aufgrund ihrer Verkrallung mit dem Rand der Einsteckausnehmung 21 beim Eindrehen einer Schraube und Aufspreizen der von der Deckplatte 1 abgewandten Enden der Klammerarme 6, 7 zum Verhindern eines unbeabsichtigten Eindrückens der Außenschenkel 10 in Richtung der Innenschenkel 5, während die Blockiernasen 19 ein vollständiges Ausfedern der Außenschenkel 10 bis zu einer gewissen Minimaldicke des Trägerteiles 22 verhindern.

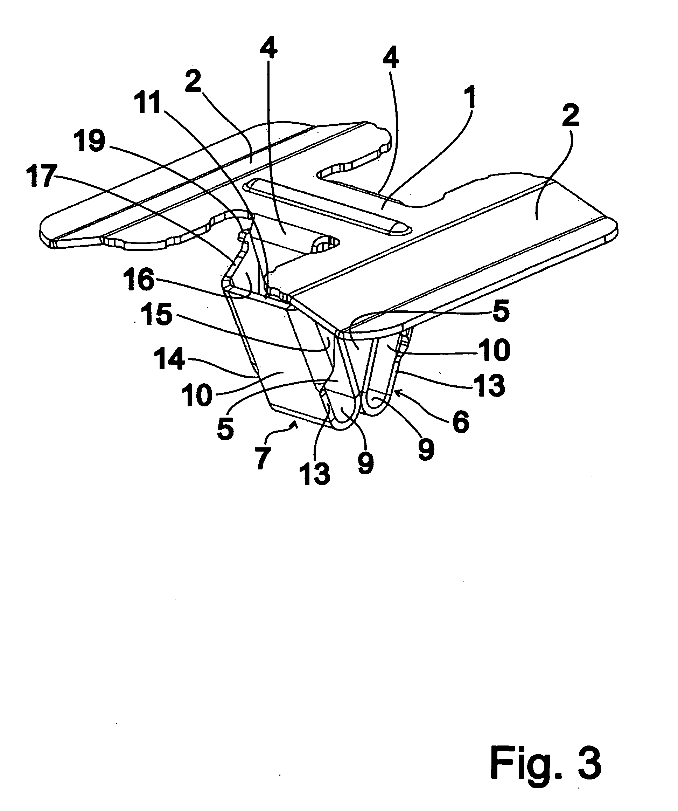

Fig. 3 zeigt in einer perspektivischen Ansicht ein weiteres Ausführungsbeispiel einer erfindungsgemäßen Vorrichtung, wobei sich bei den Ausführungsbeispielen gemäß Fig. 1, Fig. 2 sowie Fig. 3 sich wenigstens funktional entsprechende Elemente mit den gleichen Bezugszeichen versehen und im weiteren nicht näher erläutert sind. Aus Fig. 3 ist ersichtlich, dass bei diesem Ausführungsbeispiel die Breite der Innenschenkel 5 und der Außenschenkel 10 im wesentlichen gleich ist, so dass die Innenschenkel 5 zwischen den Seitenwangen 15, 16 angeordnet sind

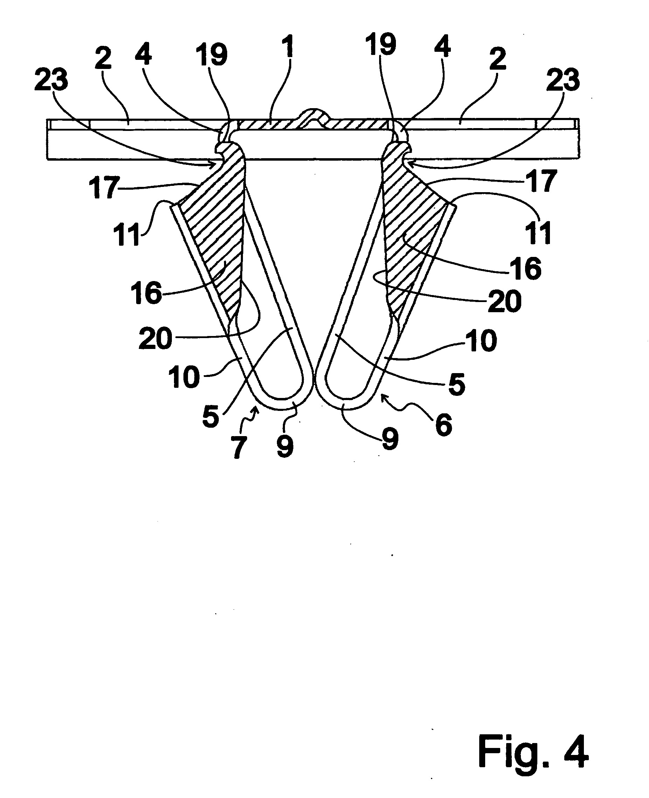

Fig. 4 zeigt das Ausführungsbeispiel gemäß Fig. 3 in einer Schnittansicht in Längsrichtung. Fig. 4 lässt sich entnehmen, dass bei diesem Ausführungsbeispiel die Stirnseiten 17 der Seitenwangen 15, 16 glattflächig ausgebildet sind, während die Blockiernasen 19 jeweils mit einer in Richtung der Außenschenkel 10 geöffneten Werkzeugansatzvertiefung 23 als Vertiefung ausgebildet sind.

Das ohne eine Gewindestruktur zur Aufnahme einer Schraube ausgebildete Ausführungsbeispiel gemäß Fig. 3 und Fig. 4 wird in eine Einsteckausnehmung eines Trägerteiles eingesteckt, wobei die Klemmwirkung allein durch das Ausfedern der Außenschenkel 10 erzielt wird. Durch Einführen eines in Fig. 3 und Fig. 4 nicht dargestellten Lösewerkzeugs in die Werkzeugansatzvertiefungen 23 lassen sich die Außenschenkel 10 in Richtung der Innenschenkel 5 bewegen, bis die Stirnseiten 11 der Außenschenkel 10 innerhalb der Umrandung der Einsteckausnehmung liegen und somit die erfindungsgemäße Vorrichtung wieder aus dem Trägerteil herausgezogen werden kann. Diese Demontierbarkeit wird durch die glattflächigen Stirnseiten 17 der Seitenwangen 15, 16 unterstützt, da keine ausgeprägte Verkrallung mit der Umrandung der Einsteckausnehmung auftritt.

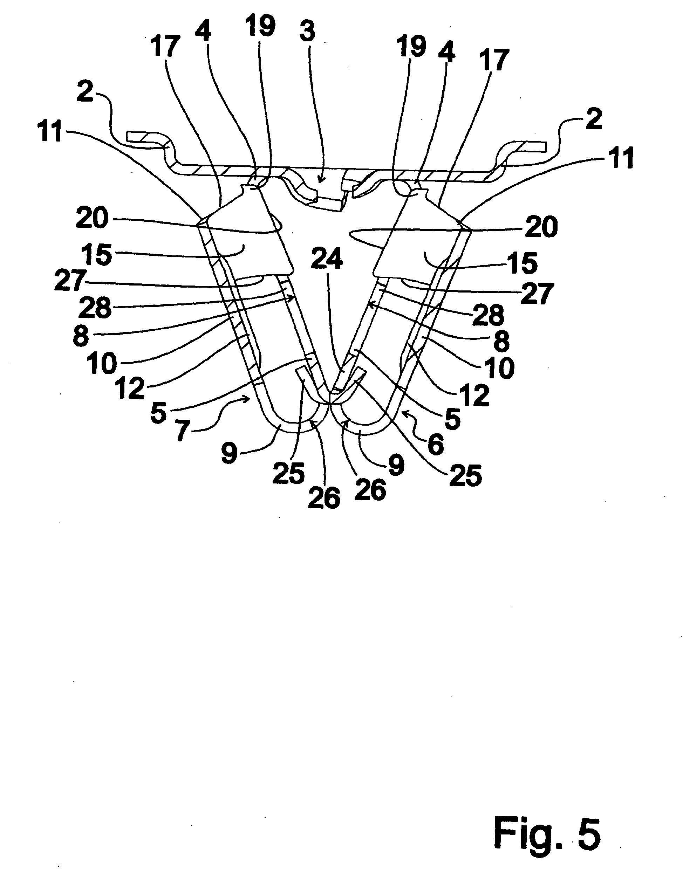

Fig. 5 zeigt in einer Schnittansicht in Längsrichtung ein weiteres Ausführungsbeispiel einer erfindungsgemäßen Vorrichtung, wobei sich bei den Ausführungsbeispielen gemäß Fig. 1 bis Fig. 4 und Fig. 5 entsprechende Elemente mit den gleichen Bezugszeichen versehen und im weiteren nicht näher erläutert sind. Bei dem Ausführungsbeispiel gemäß Fig. 5 ist an jedem Innenschenkel 5 im Bereich des jeweiligen Anbindungsabschnittes 9 ein sich in Querrichtung erstreckender Hintergriffsteg 24 und eine sich in Richtung des anderen Innenschenkels 5 erstreckende, in Richtung der Deckplatte 1 umgebogene Hintergriffzunge 25 ausgebildet ist, die durch eine in dem Anbindungsabschnitt 9 des anderen Klammerarmes 6, 7 eingebrachte Durchgriffsausnehmung 26 durchgreift und den Hintergriffsteg 24 des anderen Innenschenkels 5 hintergreift. Dadurch sind die die Klammerarme 6 an ihren von der Deckplatte 1 abgewandten Enden gegen ein Aufspreizen miteinander verriegelt, was insbesondere bei einseitigen Belastungen von Vorteil ist, um bei einer einseitigen Belastung ein Wegbiegen eines Klammerarmes 6, 7 zu vermeiden.

Weiterhin lässt sich Fig. 5 entnehmen, dass an den Seitenwangen 15,16 auf den der Deckplatte 1 abgewandten Seiten vorzugsweise in etwa rechtwinklig zu der Längsrichtung der Klammerarme 6, 7 ausgerichtete Rückseiten 27 ausgebildet sind, die gegenüberliegend von in die Aufnahmeausnehmungen 8 eintretenden, in Fig. 5 durch ihre Randkanten dargestellten Stützvorsprüngen 28 angeordnet sind. Dadurch ist die Befestigungsvorrichtung gemäß dem Ausführungsbeispiel nach Fig. 5 gegenüber einer Zugbelastung stabilisiert, da sich bei Ausüben einer Zugbelastung die Rückseiten 27 an den Stützvorsprüngen 28 abstützen.

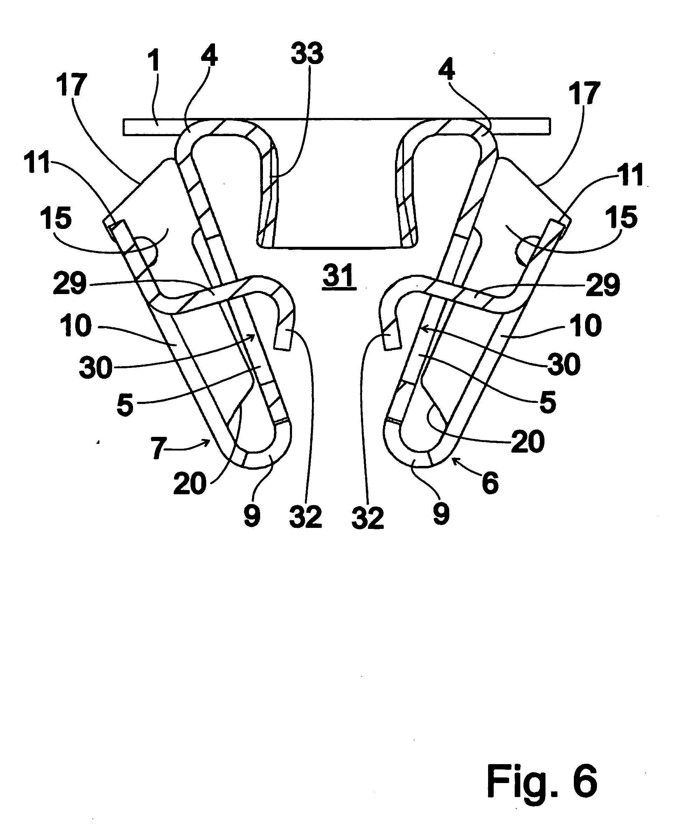

Fig. 6 zeigt in einer Schnittansicht in Längsrichtung ein weiteres Ausführungsbeispiel einer erfindungsgemäßen Vorrichtung, wobei sich bei den Ausführungsbeispielen gemäß Fig. 1 bis Fig. 5 und Fig. 6 entsprechende Elemente mit den gleichen Bezugszeichen versehen und im weiteren nicht näher erläutert sind. Bei dem Ausführungsbeispiel gemäß Fig. 6 ist bei jedem Klammerarm 6, 7 an dem Außenschenkel 10 eine sich in Richtung des anderen Klammerarmes 6, 7 erstreckende Spreizzunge 29 angeformt, die durch eine in dem gegenüberliegenden Innenschenkel 9 eingebrachte Freimachung 30 durchgreift und in einen zwischen den Klammerarmen 6, 7 ausgebildeten Schraubenaufnahmeraum 31 eintreten. Jede Spreizzunge 29 ist an ihrem von dem jeweiligen Außenschenkel 10 abgewandten freien Ende mit einem flachen Endabschnitt 32 in Richtung der Umbiegeabschnitte 9 umgebogen, wobei die Endabschnitte 32 in etwa parallel zueinander ausgerichtet sind und in Längsrichtung in der Mitte des Schraubenaufnahmeraumes 31 mit einem Abstand einander gegenüberliegen.

Bei dem Ausführungsbeispiel gemäß Fig. 6 ist an der Deckplatte 1 eine in den Schraubenaufnahmeraum 31 hineinragende Einschraubhülse 33 mit einem Innenfeingewinde angeformt, in die eine in Fig. 6 nicht dargestellte Schraube mit einem zu dem Innenfeingewinde komplementären Außenfeingewinde einschraubbar ist. Durch das Anordnen der Endabschnitte 32 in etwa in der Mitte des Schraubenaufnahmeraumes 31 erfolgt bereits sehr frühzeitig das Verspannen der Klammerarme 6, 7 zunächst über ein Aufweiten der Außenschenkel 10 und über die Umbiegeabschnitte 9 auch der Innenschenkel 5.

## Patentansprüche

1. Befestigungsvorrichtung zum Einfügen in ein Trägerteil (22) mit einer Deckplatte (1) und mit zwei an gegenüberliegenden Randseiten an der Deckplatte (1) angesetzten sowie auf einer Seite der Deckplatte (1) einander gegenüberliegenden Klammerarmen (6, 7), wobei jeder Klammerarm (6, 7) einen dem anderen Klammerarm (6, 7) zugewandten Innenschenkel (5) und einen dem anderen Klammerarm (6, 7) abgewandten Ausßenschenkel (10) aufweist, der mit einem Anbindungsabschnitt (9) mit dem von der Deckplatte (1) abgewandten Ende des Innenschenkels (5) verbunden ist und an seinem der Deckplatte (1) zugewandten Ende über eine Abstützstruktur verfügt, wobei die Abstützstruktur jedes Klammerarmes (6) mit zwei flachen Seitenwangen (15, 16) ausgebildet ist, die an einander gegenüberliegenden Seitenrändern (13, 14) des jeweiligen Außenschenkels (10) angesetzt sind und die sich in Richtung des anderen Klammerarmes (6, 7) erstrecken, und wobei jede Seitenwange (15, 16) eine gegenüber der Deckplatte (1) schräg ausgerichtete, von dem dem jeweiligen Außenschenkel (10) abgewandten Ende in Richtung des Außenschenkels (10) abfallende Stirnseite (17) aufweiset, **dadurch gekennzeichnet, dass** in jedem Innenschenkel (5) eine Aufnahmeausnehmung (8) ausgebildet ist, in die die an den gegenüberliegenden Außenschenkel (10) angesetzten Seitenwangen (15,16) eingreifen.

2. Befestigungsvorrichtung nach Anspruch 1, **dadurch gekennzeichnet, dass** die über die Außenschenkel (10) überstehende Länge der Seitenwangen (15, 16) kleiner oder höchstens gleich dem Abstand der Innenschenkel (5) im Bereich der Seitenwangen (15, 16) ist.

3. Befestigungsvorrichtung nach Anspruch 1 oder Anspruch 2, **dadurch gekennzeichnet, dass** an der Deckplatte (1) eine Gewindestruktur (3) und an jeder Stirnseite (17) jeder Seitenwange (15, 16) eine Stufenstruktur (18) mit Erhebungen und Vertiefungen ausgebildet ist.

4. Befestigungsvorrichtung nach einem der Ansprüche 1 bis 3, **dadurch gekennzeichnet, dass** an den von den Außenschenkeln (10) abgewandten Enden der Seitenwangen (15, 16) jeweils eine sich in Richtung der Deckplatte (1) erstreckende Abschlusserhebung (19) ausgebildet ist.

5. Befestigungsvorrichtung nach Anspruch 4, **dadurch gekennzeichnet, dass** die Abschlusserhebungen (19) jeweils mit einer in Richtung der Außenschenkel (10) geöffneten Vertiefung (23) ausgebildet sind.

6. Befestigungsvorrichtung nach einem der Ansprüche 1 bis 5, **dadurch gekennzeichnet, dass** an jedem Innenschenkel (5) im Bereich des jeweiligen Anbindungsabschnittes (9) ein sich in Querrichtung erstreckender Hintergriffsteg (24) und eine sich in Richtung des anderen Innenschenkels (9) erstreckende Hintergriffzunge (25) ausgebildet ist, die den Hintergriffsteg (24) des anderen Innenschenkels (5) hintergreift, so dass die Klammerarme (6, 7) an ihren von der Deckplatte (1) abgewandten Enden gegen ein Aufspreizen miteinander verriegelt sind.

7. Befestigungsvorrichtung nach einem der Ansprüche 1 bis 5, **dadurch gekennzeichnet, dass** an jedem Außenschenkel (10) eine sich in Richtung des anderen Außenschenkels (10) erstreckende Spreizzunge (29) angeformt ist, die durch eine in dem dem jeweiligen Außenschenkel (10) gedehüberliegenden-Innenschenkel (9) eingebrachte Freimachung (30) durchgreift.

8. Befestigungsvorrichtung nach Anspruch 7, **dadurch gekennzeichnet, dass** an dem freien Ende jeder Spreizzunge (29) ein flacher Endabschnitt (32) ausgebildet ist, wobei sich die Endanschnitte (32) in einem Abstand in etwa parallel zueinander gegenüberliegen.

9. Befestigungsvorrichtung nach einem der Ansprüche 1 bis 8, **dadurch gekennzeichnet**, an den Seitenwangen (15, 16) auf den der Deckplatte (1) abgewandten Seiten in etwa rechtwinklig zu der Längsrichtung der Klammerarme (6, 7) ausgerichtete Rückseiten (27) ausgebildet sind, die gegenüberliegend von in die Aufnahmeausnehmungen (8) eintretenden Stützvorsprüngen (28) angeordnet sind.

## Claims

1. Fastening device for insertion into a support part (22), comprising a cover plate (1) and comprising two clamp arms (6, 7) which are attached to opposite edges of the cover plate (1) and are opposite one another on one side of the cover plate (1), each clamp arm (6, 7) having an inner limb (5) facing the other clamp arm (6, 7) and an outer limb (10) facing away from the other clamp arm (6, 7) and connected by means of a connecting section (9) to that end of the inner limb (5) which faces away from the cover plate (1) and having a support structure at its end facing the cover plate (1), the support structure of each clamp arm (6) being formed with two flat side cheeks (15, 16) which are mounted on opposite lateral edges (13, 14) of the respective outer limb (10) and which extend in the direction of the other clamp arm (6, 7), and each side cheek (15, 16) having an end face (17) which is oriented obliquely relative to the cover plate (1) and slopes downwards, in the direction of the outer limb (10), from the end facing away from the respective outer limb (10), **characterized in that** a receiving recess (8) which is engaged by the side cheeks (15, 16) attached to the opposite outer limb (10) is formed in each inner limb (5).

2. Fastening device according to Claim 1, **characterized in that** the length of the side cheeks (15, 16) which projects beyond the outer limbs (10) is less than or at most equal to the spacing of the inner limbs (5) in the region of the side cheeks (15, 16).

3. Fastening device according to Claim 1 or Claim 2, **characterized in that** a thread structure (3) is formed on the cover plate (1) and a step structure (18) with elevations and indentations is formed on each end face (17) of each side cheek (15, 16).

4. Fastening device according to any of Claims 1 to 3, **characterized in that** an end elevation (19) extending in the direction of the cover plate (1) is formed in each case at those ends of the side cheeks (15, 16) which face away from the outer limbs (10).

5. Fastening device according to Claim 4, **characterized in that** the end elevations (19) are each formed with an indentation (23) open in the direction of the outer limbs (10).

6. Fastening device according to any of Claims 1 to 5, **characterized in that** a rear-engaging web (24) extending in the transverse direction and a rear-engaging tongue (25) extending in the direction of the other inner limb (5) are formed on each inner limb (5) in the region of the respective connecting section (9), which rear-engaging tongue (25) engages behind the rear-engaging web (24) so that the clamp arms (6, 7) are locked with one another at their ends facing away from the cover plate (1) to prevent them from spreading apart.

7. Fastening device according to any of Claims 1 to 5, **characterized in that** an expanding tongue (29) which extends in the direction of the other outer limb (10) and passes through a clearance (30) made in the inner limb (9) opposite the respective outer limb (10) is formed on each outer limb (10).

8. Fastening device according to Claim 7, **characterized in that** a flat end section (32) is formed on the free end of each expanding tongue (29), the end sections (32) being opposite one another a distance apart and approximately parallel to one another.

9. Fastening device according to any of Claims 1 to 8, **characterized in that** backs (27) which are oriented approximately at right angles to the longitudinal direction of the clamp arms (6, 7) and are arranged opposite support projections (28) entering the receiving recesses (8) are formed on the side cheeks (15, 16), on the sides facing away from the cover plate (1).

## Revendications

1. Dispositif de fixation destiné à être inséré dans un élément faisant office de support (22), comprenant une plaque supérieure (1) et deux pattes d'agrafage (6, 7) attenantes à deux bords latéraux diamétralement opposés de la plaque supérieure (1) ainsi que se faisant respectivement face sur un côté de la plaque supérieure (1), dans lequel chaque patte d'agrafage (6, 7) se compose d'un segment intérieur (5) orienté vers l'autre patte d'agrafage (6, 7) et d'un segment extérieur (10) orienté à l'opposé de l'autre patte d'agrafage (6, 7), qui est raccordé, par une portion de liaison (9), à l'extrémité du segment intérieur (5) orientée à l'opposé de la plaque supérieure (1) et qui est muni, au niveau de son extrémité orientée vers la plaque supérieure (1) d'une structure d'appui, la structure d'appui de chaque patte d'agrafage (6) comprenant en l'occurrence deux faces latérales plates (15, 16) qui sont attenantes aux bords latéraux (13, 14) se faisant respectivement face du segment extérieur (10) respectif et qui s'étendent dans la direction de l'autre patte d'agrafage (6, 7), et chaque face latérale (15, 16) comprenant en l'occurrence une face antérieure (17) disposée obliquement par rapport à la plaque supérieure (1) s'étendant, suivant un tracé incliné, de l'extrémité orientée à l'opposé de chaque segment extérieur respectif (10) dans la direction du segment extérieur (10), **caractérisé en ce qu'**il est prévu, dans chaque segment intérieur (5), une ouverture d'insertion (8), dans laquelle les faces latérales (15, 16) attenantes au segment extérieur (10) diamétralement opposé viennent s'engager en prise d'encastrement.

2. Dispositif de fixation selon la revendication 1, **caractérisé en ce que** la longueur dans la proportion de laquelle les faces latérales (15, 16) font saillie au-dessus du segment extérieur (10) est inférieure ou tout au plus égale à l'intervalle d'écartement des segments intérieurs (5) dans la zone des faces latérales (15, 16).

3. Dispositif de fixation selon la revendication 1 ou la revendication 2, **caractérisé en ce que** la plaque supérieure (1) comporte une structure filetée (3) et chaque face antérieure (17) de chaque face latérale (15, 16) une structure en gradins faite d'une succession de protubérances et de dépressions.

4. Dispositif de fixation selon l'une des revendications 1 à 3, **caractérisé en ce qu'**il est respectivement prévu, au niveau des extrémités des faces latérales (15, 16) orientées à l'opposé des segments extérieurs (10), une protubérance d'extrémité (19) s'étendant dans la direction de la plaque supérieure (1).

5. Dispositif de fixation selon la revendication 4, **caractérisé en ce que** les protubérances d'extrémité (19) comportent respectivement une partie en creux (23) ouverte dans la direction des segments extérieurs (10).

6. Dispositif de fixation selon l'une des revendications 1 à 5, **caractérisé en ce qu'**il est prévu, au niveau de chaque segment intérieur (5), dans la zone de leur portion de liaison respective (9), une barrette de mise en prise d'accrochage par derrière (24) s'étendant dans le sens transversal et une languette de mise en prise d'accrochage par derrière (25) s'étendant dans la direction de l'autre segment intérieur (9), qui vient cramponner par derrière la barrette de mise en prise d'accrochage (24) de l'autre segment intérieur (5), ce qui fait que les pattes d'agrafage (6, 7) sont, par un effet de verrouillage réciproque s'exerçant au niveau de leurs extrémités orientées à l'opposé de la plaque supérieure (1), dans l'impossibilité de s'écarter.

7. Dispositif de fixation selon l'une des revendications 1 à 5, **caractérisé en ce que** chaque segment extérieur (10) comporte, réalisée solidaire de celui-ci par formage, une languette expansible (29) s'étendant dans la direction de l'autre segment extérieur (10) qui s'engage en prise dans un dégagement (30) ménagé dans le segment intérieur (5) respectivement opposé à chaque segment extérieur (10).

8. Dispositif de fixation selon la revendication 7, **caractérisé en ce qu'**il est prévu, au niveau de l'extrémité libre de chaque languette expansible (29) une portion d'extrémité aplatie (32), les portions d'extrémité (32) se trouvant en l'occurrence respectivement disposées face à face écartées l'une de l'autre selon une orientation sensiblement parallèle.

9. Dispositif de fixation selon l'une des revendications 1 à 8, **caractérisé en ce que** les faces latérales (15, 16 comportent, sur leurs côtés orientés à l'opposé de la plaque supérieure (1), des faces arrières (27) orientées sensiblement de manière perpendiculaire par rapport au sens longitudinal des pattes d'agrafage (6, 7), qui sont disposées face à des bossages d'appui pénétrant dans les ouvertures d'insertion (8).
